# EUROPEAN PATENT APPLICATION

(11) **EP 2 360 783 A2**
(43) Date of publication of application: **24.08.2011**
(21) Application number: 11150535.0
(22) Date of filing: 11.01.2011
(51) Int. Cl.: H01Q 1/24, H01Q 21/28

(54) **Universal serial bus type wireless data card with extendable antennas**

(30) Priority: 29.01.2010 KR 20100008804
(71) Applicant: PANTECH CO., LTD., Seoul 121-270 (KR)
(72) Inventor: Kim, Jung-Hwan, Seoul (KR); Yuk, Su-Jung, Seoul (KR); Yun, Sung-Jun, Gyeonggi-do (KR); Lee, Sang-Youp, Seoul (KR); Jung, Chang-Jean, Seoul (KR); Choi, Beom-Soon, Seoul (KR)
(74) Representative: Herzog, Markus

(57) **Abstract**

A universal serial bus (USB) type wireless data card is used for wireless communication in a multi-in/multi-out (MIMO) environment. The USB type wireless data card includes a card body. A USB connector is disposed at one end of the card body and connectable to a USB port of an electronic device. An antenna part includes first and second antennae connected to the card body such that the first and second antennae may be received in the card body and may be extended from the card body to move away from the card body and be spaced apart from the USB connector.

## Description

### CROSS-REFERENCE TO RELATED APPLICATION

This application claims priority from and the benefit under 35 U.S.C. §119(a) of Korean Patent Application No. 10-2010-0008804, filed on January 29, 2010, the disclosure of which is incorporated by reference for all purposes.

### BACKGROUND

1. Field

The following description relates to a wireless data card, and more particularly, to a universal serial bus (USB) type wireless data card used for wireless communication.

2. Discussion of the Background

In general, a modem, which is a device for modulating and demodulating a sound signal or a digital signal into a signal of a radio frequency (RF) band and transmitting and receiving the signal, is used in wireless network techniques. A wireless data communication device in which such a modem is disposed may be referred to as a wireless data card.

The wireless data card enables a mobile phone to access the Internet through a code division multiple access (CDMA) or a wideband CDMA mobile communication network. Therefore, the wireless data card enables a user to access the Internet wherever a mobile phone can be used.

The wireless data card can be classified as a USB type card, an express card, a personal computer memory card international association (PCMCIA) card, or a mini peripheral component interconnect (MiniPCI) card, depending on an interface type. An initially developed type of the wireless data card is the PCMCIA card. However, the PCMCIA card has a large size, which causes inconvenience in inserting the card into a slot in a notebook computer and in carrying the card. In recent times, as notebook computers have become light in weight and smaller, the USB type wireless data card has become more widely used. The USB type wireless data card may be inserted into a USB port, and have a small size and weight to provide carrying convenience.

Meanwhile, in order to increase capacity of wireless communication, a multiple input and multiple output (MIMO) technique may be utilized. The MIMO technique is a technique using a plurality of antennae in base stations and terminals to increase capacity in proportion to the number of antennae. In this MIMO environment, the wireless data card also includes a plurality of antennae to realize wireless data communication.

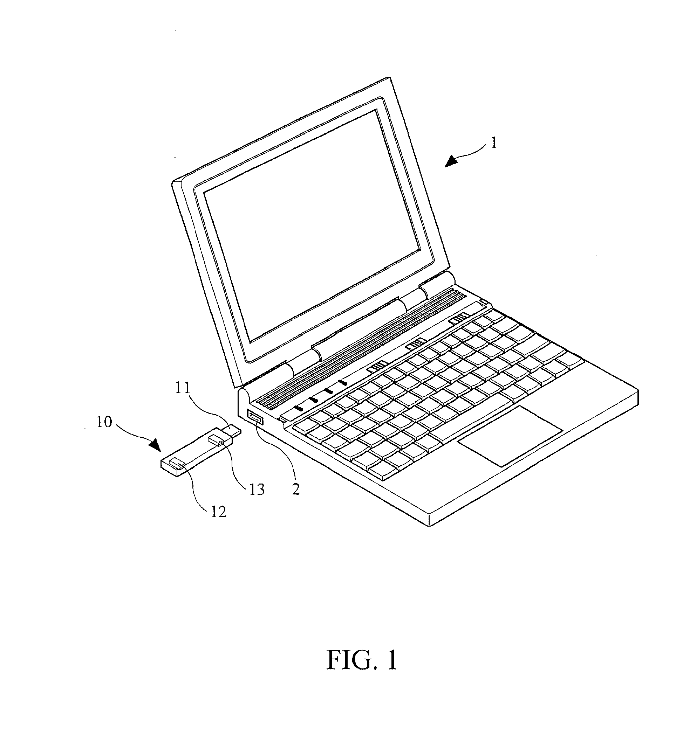

For example, as shown in FIG. 1, a conventional wireless data card 10 includes a first antenna 12, a second antenna 13, and a USB connector 11. The first antenna 12 is disposed farther from the USB connector 11 than the second antenna 13. The USB connector 11 is connected to a USB port 2 of a notebook computer 1. Therefore, in a state in which the wireless data card 10 is mounted in the notebook computer 1, radiation efficiency of the second antenna 13 adjacent to the notebook computer 1 is less than the radiation efficiency of the first antenna 12.

While the second antenna 13 may be disposed near the first antenna 12, isolation may decrease as the second antenna 13 becomes nearer to the first antenna 12. This may cause decrease in performance of the wireless data card 10.

### SUMMARY

Exemplary embodiments of the present invention provide a USB type wireless data card that may be capable of improving antenna efficiency, obtaining stable isolation to improve a fading phenomenon, and increasing performance in a shadow area.

Additional features of the invention will be set forth in the description which follows, and in part will be apparent from the description, or may be learned by practice of the invention.

An exemplary embodiment provides a universal serial bus (USB) type wireless data card including a card body; a USB connector disposed at a first end of the card body; and an antenna part comprising a first antenna and a second antenna, the first antenna and the second antenna being movable between being disposed in the card body and being extended from the card body.

It is to be understood that both the foregoing general description and the following detailed description are exemplary and explanatory and are intended to provide further explanation of the invention as claimed. Other features will become apparent to those skilled in the art from the following detailed description, which, taken in conjunction with the attached drawings, discloses exemplary embodiments of the invention.

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.

FIG. 1 is a perspective view of an example of a conventional wireless data card.

FIG. 2 is a perspective view of a USB type wireless data card in accordance with an exemplary embodiment of the present invention.

FIG. 3 is a cross-sectional view of FIG. 2.

FIG. 4 is a cross-sectional view of FIG. 3, showing first and second antennae extending from both sides of a card body.

FIG. 5 is a plan view of a USB type wireless data card in accordance with a an exemplary embodiment of the present invention.

FIG. 6 is a plan view of FIG. 5, showing first and second antennae slid from a card body and rotated 90° to extend therefrom.

FIG. 7 is a perspective view of FIG. 5, showing a guide groove for guiding slide movement and rotation of first and second antenna mounting parts.

FIG. 8 is a plan view of a USB type wireless data card in accordance with an exemplary embodiment of the present invention.

FIG. 9 is a plan view of FIG. 8, showing first and second antennae projecting from both sides of a card body in a two-stage manner.

FIG. 10 is a plan view of a USB type wireless data card in accordance with an exemplary embodiment of the present invention.

FIG. 11 is a plan view of FIG. 10, showing first and second antennae diagonally projecting from a card body.

FIG. 12 is a graph showing isolation characteristics between the first and second antennae of the wireless data card in accordance with an exemplary embodiment of present invention.

Throughout the drawings and the detailed description, unless otherwise described, the same drawing reference numerals will be understood to refer to the same elements, features, and structures. The relative size and depiction of these elements may be exaggerated for clarity, illustration, and convenience.

### DETAILED DESCRIPTION OF THE ILLUSTRATED EMBODIMENTS

The invention is described more fully hereinafter with reference to the accompanying drawings, in which exemplary embodiments of the invention are shown. This invention may, however, be embodied in many different forms and should not be construed as limited to the embodiments set forth herein. Rather, these exemplary embodiments are provided so that this disclosure is thorough, and will fully convey the scope of the invention to those skilled in the art. In the drawings, the size and relative sizes of layers and regions may be exaggerated for clarity.

It will be understood that when an element, such as a layer, film, region, or substrate, is referred to as being "connected to" or "disposed" in, on, or at a region of another element, it can be connected directly to or disposed directly in, on, or at the region of the other element, or intervening elements may also be present. In contrast, when an element is referred to as being "connected directly to" or "disposed directly" in, on, or at the region of the other element, there are no intervening elements present.

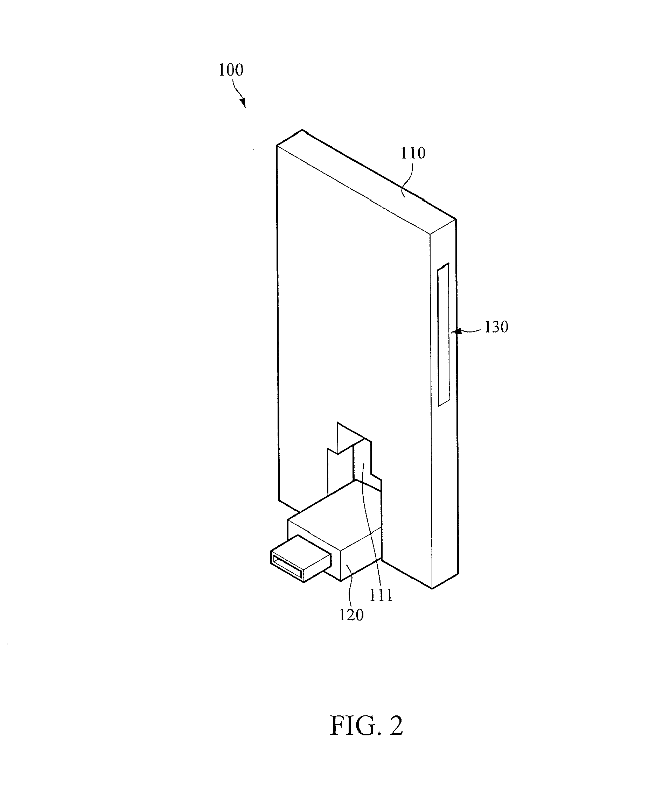

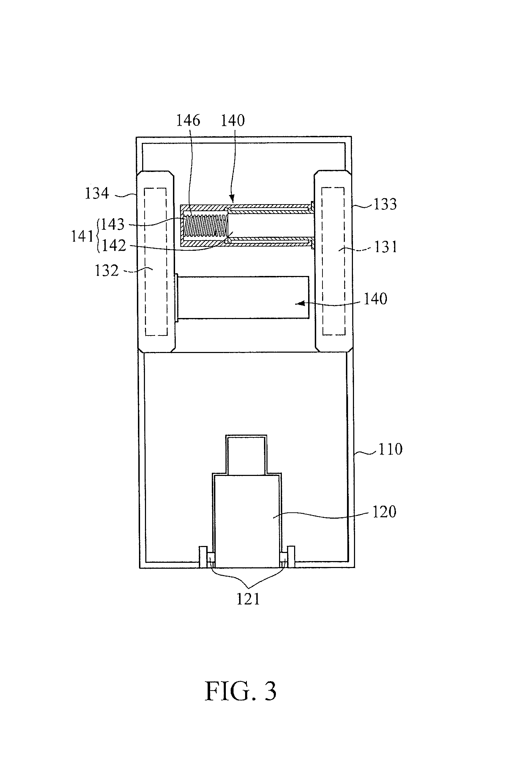

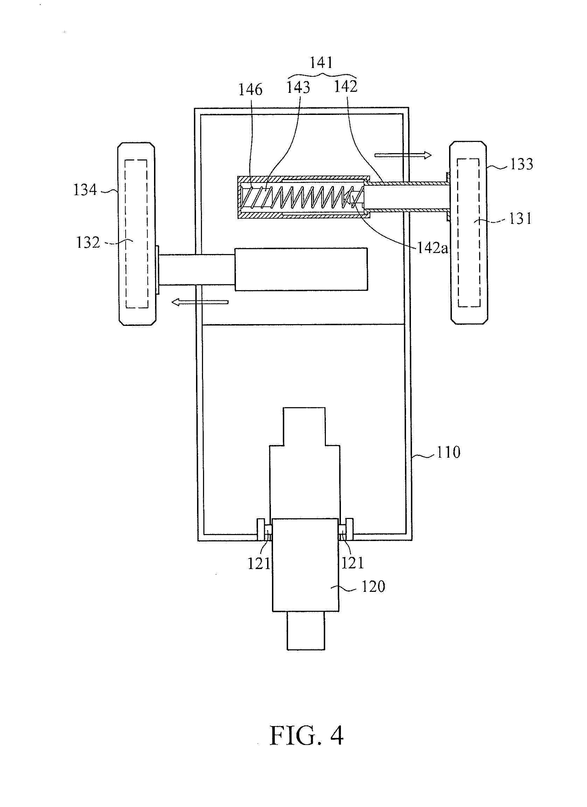

FIG. 2 is a perspective view of a USB type wireless data card in accordance with an exemplary embodiment of the present invention. FIG. 3 is a cross-sectional view of FIG. 2. And, FIG. 4 is a cross-sectional view of FIG. 3, showing first and second antennae projecting from respective sides of a card body while in use.

Referring to FIG. 2, FIG. 3, and FIG. 4, a USB type wireless data card 100 includes a card body 110, a USB connector 120, and an antenna part 130. The card body 110 includes a printed circuit board (not shown) including a control circuit to control the wireless data card 100, etc.

The USB connector 120 is disposed at a first end of the card body 110, and is electrically connected to the printed circuit board in the card body 110. The USB connector 120 is connectible to or separable from a USB port of an electronic device, e.g., a notebook computer. The USB connector 120 can transmit an electrical signal between the card body 110 and the notebook computer in a state in which the USB connector 120 is connected to the notebook computer.

The USB connector 120 may be connected to the card body 110 by a hinge 121 (as shown in FIG. 3 and FIG. 4) so as to move between a state in which the USB connector 120 is received in a connector receiving groove 111 of the card body 110 and a state in which the USB connector 120 is extended from the card body 110. The receiving grove 111 may be of a shape complementary to a shape of the USB connector 120. Therefore, since the USB connector 120 can be received in the connector receiving groove 111 while not in use, the entire wireless data card 100 can maintain a more compact state.

As shown in FIG. 3, the antenna part 130 includes a first antenna 131 and a second antenna 132. The first antenna 131 and the second antenna 132 enable wireless communication in a MIMO environment. The antenna part 130 is disposed in the card body 110 such that the first antenna 131 and the second antenna 132 are received in the card body 110, and the first antenna 131 and the second antenna 132 extend from the card body 110 to move away from each other and to be spaced apart from the USB connector 120.

For example, the antenna part 130 may include a first antenna mounting part 133 in which the first antenna 131 is mounted and a second antenna mounting part 134 in which the second antenna 132 is mounted. The first antenna mounting part 133 and the second antenna mounting part 134 may be disposed to slide through respective sides of the card body 110 to be received in the card body 110 or to extend from the card body 110. The first antenna mounting part 133 and the second antenna mounting part 134 may be stably slid along a guide (not shown) disposed between the card body 110 and the first antenna mounting part 133 and between the card body 110 and the second antenna mounting part 134.

The first antenna mounting part 133 and the second antenna mounting part 134 may be received in the card body 110 as shown in FIG. 3. Therefore, since the entire wireless data card 100 can be maintained in a compact state, a user can conveniently carry or store the wireless data card 100.

As shown in FIG. 4, the first antenna mounting part 133 and the second antenna mounting part 134 may slide and extend from respective sides of the card body 110 to extend the first antenna 131 and the second antenna 132 from the card body 110. Thus, the first antenna 131 and the second antenna 132 can extend away from the USB connector 120. As a result, the first antenna 131 and the second antenna 132 may be able to experience reduced noise occurring from the notebook computer and/or the USB port of the notebook computer to increase radiation efficiency.

In addition, if the first antenna mounting part 133 and the second antenna mounting part 134 are extended from the respective sides of the card body 110, the first antenna 131 and the second antenna 132 are disposed away from each other, thereby obtaining isolation between the first antenna 131 and the second antenna 132.

In the wireless data card 100 as described above, a user may grip the first antenna mounting part 133 and the second antenna mounting part 134 disposed in the card body 110 to slide the first antenna mounting part 133 and the second antenna mounting part 134 to be extended from the card body 110. However, the wireless data card 100 may be configured to automatically slide and project if a user applies a force to the first antenna mounting part 133 and the second antenna mounting part 134 disposed in the card body 110.

For example, the wireless data card 100 may include automatic extenders 140. The automatic extenders 140 lock the first antenna mounting part 133 and the second antenna mounting part 134 received in the card body 110, and if an external force is applied to the locked first antenna mounting part 133 and second antenna mounting part 134, release the first antenna mounting part 133 and the second antenna mounting part 134 to automatically extend the first antenna mounting part 133 and the second antenna mounting part 134 from the card body.

Each automatic extender 140 may include a locking release part 141 and a bias member 146. The locking release parts 141 lock the first antenna mounting part 133 and the second antenna mounting part 134 received in the card body 110, and if an external force is applied to the locked first antenna mounting part 133 and second antenna mounting part 134, release the locked state. The bias members 146 apply a resilient force to the first antenna mounting part 133 and the second antenna mounting part 134 such that the first antenna mounting part 133 and the second antenna mounting part 134 automatically project when the first antenna mounting part 133 and the second antenna mounting part 134 are released from the locked state.

The bias members 146 may be compression springs. The compression springs are disposed such that the first antenna mounting part 133 and the second antenna mounting part 134 compress the compression springs in a state in which the first antenna mounting part 133 and the second antenna mounting part 134 are received in the card body 110. The compression springs generate an extension force if the locked state of the first antenna mounting part 133 and the second antenna mounting part 134 (as shown in FIG. 3) is released to automatically extend the first antenna mounting part 133 and the second antenna mounting part 134 from the card body 110 (as shown in FIG. 4).

The locking release part 141 may include a support 142 and a holder 143. The locking release part 141 connected to the first antenna mounting part 133 will be exemplarily described. The support 142 has a first end connected to the first antenna mounting part 133, and a second end including a hook 142a, which may be coupled to the holder 143 or released from the holder 143. The holder 143 may couple to the hook 142a if the first antenna mounting part 133 is received in the card body 110, and may be released from the hook 142a if an external force is applied to the received first antenna mounting part 133.

For example, the holder 143 may have a coupling groove coupled to the hook 142a of the support 142. The holder 143 may be configured to be coupled to the hook 142a as the coupling groove is opened and then closed when the holder 143 receives a force through the hook 142a and then is released, and the holder 143 may be separated from the hook 142a as the coupling groove is opened when the holder 143 receives a force through the hook 142a again. However, the hook 142a and the holder 143 are not limited to the above example.

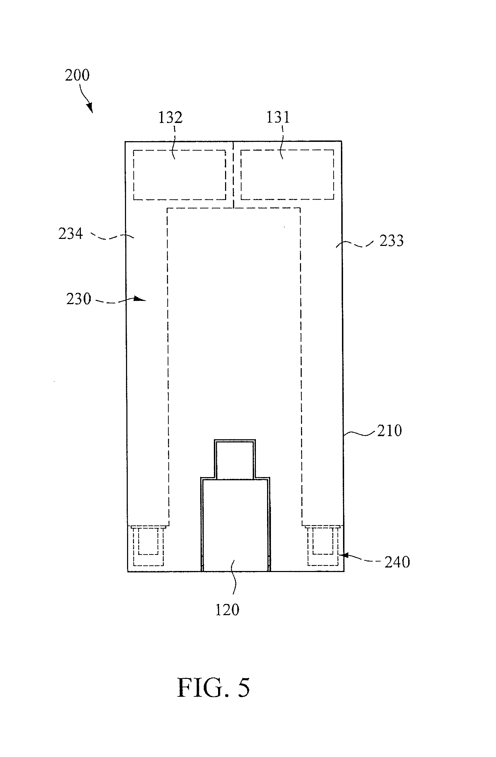

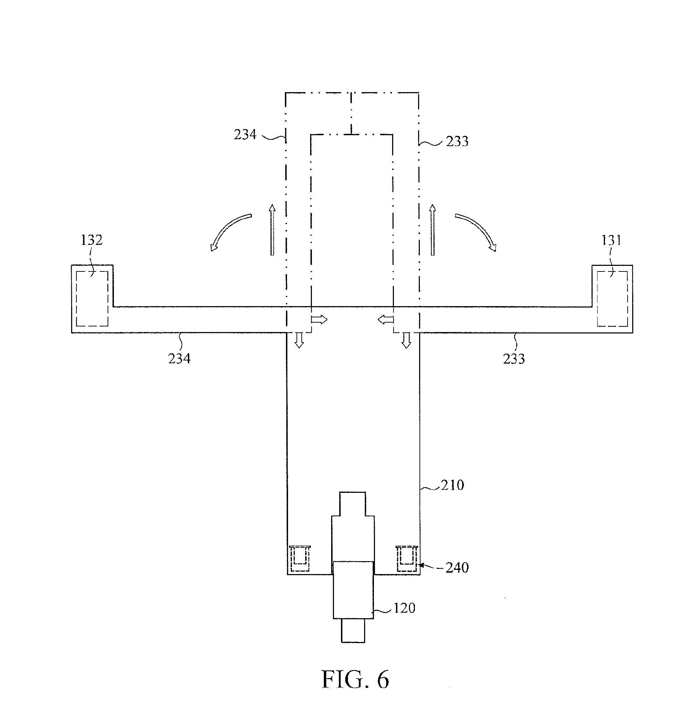

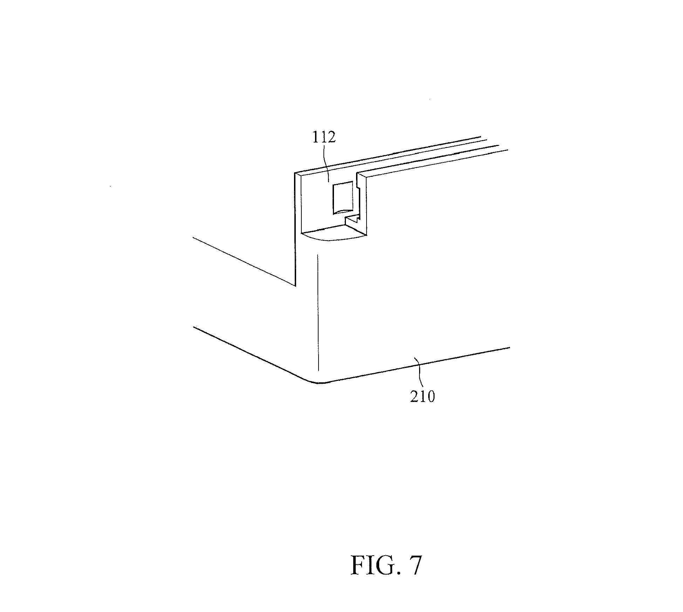

FIG. 5 is a plan view of a USB type wireless data card in accordance with an exemplary embodiment of the present invention. FIG. 6 is a plan view of FIG. 5, showing a first antenna and a second antenna extended from a card body. FIG. 7 is a perspective view of FIG. 5, showing a guide groove that guides slide movement and rotation of a first antenna mounting part and a second antenna mounting part.

Referring to FIG. 5, FIG. 6, and FIG. 7, an antenna part 230 of a wireless data card 200 according to the embodiment includes a first antenna mounting part 233 and a second antenna mounting part 234, in which a first antenna 131 and a second antenna 132 are mounted. The first antenna 131 and the second antenna 132 are respectively mounted at first ends of the first antenna mounting part 233 and the second antenna mounting part 234opposite from the USB connector 120. In addition, the first antenna mounting part 233 and the second antenna mounting part 234 are disposed in the card body 210 such that the first antenna mounting part 233 and the second antenna mounting part 234 slide and extend from an end of the card body 210. The first antenna mounting part 233 and the second antenna mounting part 234 slide along the card body 210 away from an end of the card body 210 in which the USB connector 120 is disposed. The first antenna mounting part 233 and the second antenna mounting part 234 are then rotated 90° from the card body 210 in opposite directions to move away from each other as shown in FIG. 6. Guide protrusions are formed at the first antenna mounting part 233 and the second antenna mounting part 234, respectively. In addition, as shown in FIG. 7, guide grooves 112 may be formed at the card body 210 such that the guide protrusions are inserted into the guide grooves 112 to guide the slide movement and rotation of the first antenna mounting part 233 and the second antenna mounting part 234.

The first antenna mounting part 233 and the second antenna mounting part 234 are received in the card body 110, as shown in FIG. 5. In this state, as shown in FIG. 6, the first antenna mounting part 233 and the second antenna mounting part 234 may be slid from the card body 110 toward the end of the card body 110 opposite to the end in which the USB connector 120 is disposed, and then, rotate 90° from respective sides of the card body 210 to move away from each other. Here, since the first antenna 131 and the second antenna 132 are respectively mounted in ends of the first antenna mounting part 233 and the second antenna mounting part 234 opposite from the USB connector 120, the first antenna 131 and the second antenna 132 are moved away from the USB connector 120 and spaced apart from each other. As a result, radiation efficiency of the first antenna 131 and the second antenna 132 may be increased, and isolation between the first antenna 131 and the second antenna 132 may be improved.

In the wireless data card 200, a user may grip the first antenna mounting part 233 and the second antenna mounting part 234 received in the card body 110 to slide and extend the first antenna mounting part 233 and the second antenna mounting part 234 from the card body 110. However, the wireless data card 200 may be configured to automatically slide and extend the first antenna mounting part 233 and the second antenna mounting part 234 if a user applies a force to the first antenna mounting part 233 and the second antenna mounting part 234 received in the card body 110.

In this case, the user may grip the automatically extended first antenna mounting part 233 and the second antenna mounting part 234 to slide the first antenna mounting part 233 and the second antenna mounting part 234 to a rotation position of the first antenna mounting part 233 and the second antenna mounting part 234, and then, rotate the mounting parts 233 and 234 90° from both sides of the card body 110. In order to automatically extend the first antenna mounting part 233 and the second antenna mounting part 234, the wireless data card 200 may include an automatic extender 240. The automatic extender 240 may be configured similar to the automatic extenders 140 as described above.

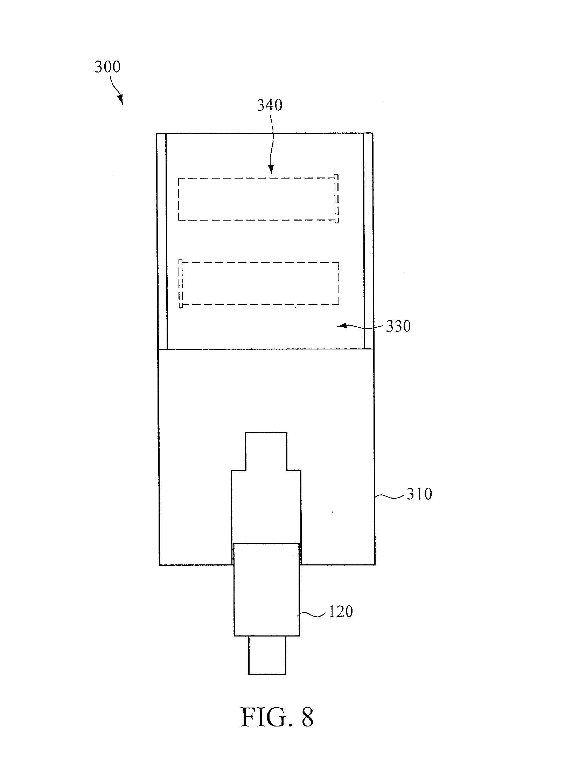

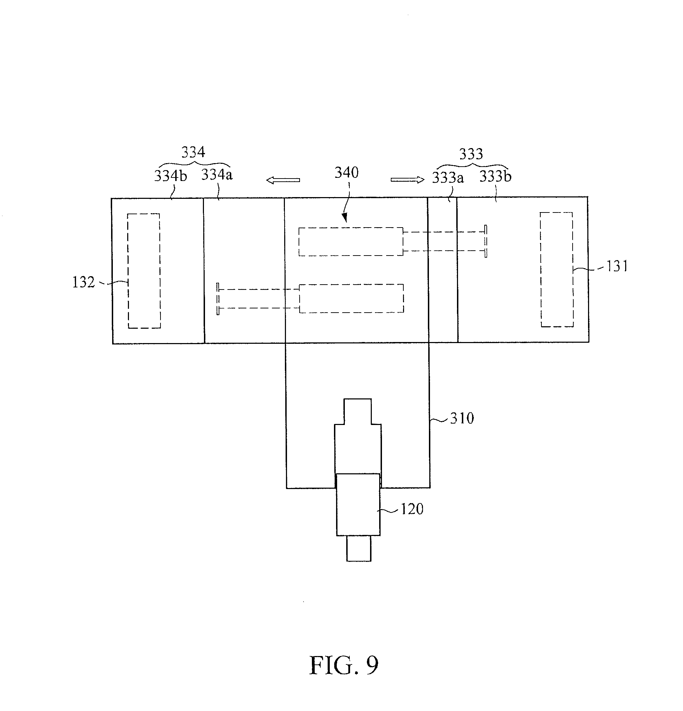

FIG. 8 is a plan view of a USB type wireless data card in accordance with an exemplary embodiment of the present invention. FIG. 9 is a plan view of FIG. 8, showing first antenna and second antenna extending from respective sides of a card body in a two-stage manner.

Referring to FIG. 8 and FIG. 9, in an antenna part 330 of a wireless data card 300, a first antenna mounting part 333 is disposed at a first or front surface of the card body 310, and a second antenna mounting part 334 is disposed at a second or rear surface of the card body 310. The first antenna mounting part 333 is disposed in the card body 310 to slide and extend from the front surface of the card body 310 to a side of the card body 310 in a two-stage manner. In addition, the first antenna 131 is mounted in an end of the first antenna mounting part 333 and, in a state in which the first antenna mounting part 333 extends from the card body 310, the first antenna 131 is disposed away from the card body 310. For example, the first antenna mounting part 333 may include a first stage projection 333a and a second stage projection 333b. Here, the first stage projection 333a is slidably disposed in the card body 310, and the second stage projection 333b is slidably disposed in the first stage projection 333a. The first antenna 131 may be mounted in the second stage projection 333b.

The second antenna mounting part 334 is disposed in the card body 310 to slide and extend from the rear surface of the card body 310 in a two-stage manner in a direction opposite to an extension direction of the first antenna mounting part 333. In addition, the second antenna 132 is mounted in an end of the second antenna mounting part 334 that is disposed away from the card body 310 when in a state in which the second antenna mounting part 334 extends from the card body 310. The second antenna mounting part 334 has a similar structure as the first antenna mounting part 333, and includes a first stage projection 334a and a second stage projection 334b. Here, the second antenna 132 may be mounted in the second stage projection 334b.

The first antenna mounting part 333 and the second antenna mounting part 334 are folded to the card body 310, as shown in FIG. 8. In this state, as shown in FIG. 9, the user may slide the first antenna mounting part 333 and the second antenna mounting part 334 from respective sides of the card body 310 in a two-stage manner to extend the first antenna mounting part 333 and the second antenna mounting part 334. Therefore, the first antenna 131 and the second antenna 132 move away from the USB connector 120 and are spaced apart from each other. As a result, radiation efficiency of the first antenna 131 and the second antenna 132 may be increased, and isolation between the first antenna 131 and the second antenna 132 may be improved.

Further, the first stage projection 333a of the first antenna mounting part 333 may have a shorter length than the first stage projection 334a of the second antenna mounting part 334 in the direction of the sliding. And, the second stage projection 333b of the first antenna mounting part 333 may have a longer length than the second stage projection 334b of the second antenna mounting part 334 in the direction of the sliding. The first antenna mounting part 333 and the second antenna mounting part 334 may each fold about the card body 310 between the card body 310 and the respective first stage projection 333a and first stage projection 334a as well as between the first stage projection 333a and the first stage projection 334a and the respective second stage projection 333b and second stage projection 334b.

In the wireless data card 300, a user may push the first antenna mounting part 333 and the second antenna mounting part 334 folded to the card body 310 to slide and extend the first antenna mounting part 333 and the second antenna mounting part 334 from the card body 310. Meanwhile, the wireless data card 300 may be configured to automatically slide and extend the first antenna mounting part 333 and the second antenna mounting part 334 in a two-stage manner if the user applies a force to the first antenna mounting part 333 and the second antenna mounting part 334 folded to the card body 310. For this purpose, the wireless data card 300 may include automatic extenders 340. The automatic extenders 340 may be configured similar to the automatic extenders 140 described above. Here, the automatic extenders 340 may be disposed between the card body 310 and the first stage projections 333a and 334a and between the first stage projections 333a and 334b and the second stage projections 333b and 334b, respectively.

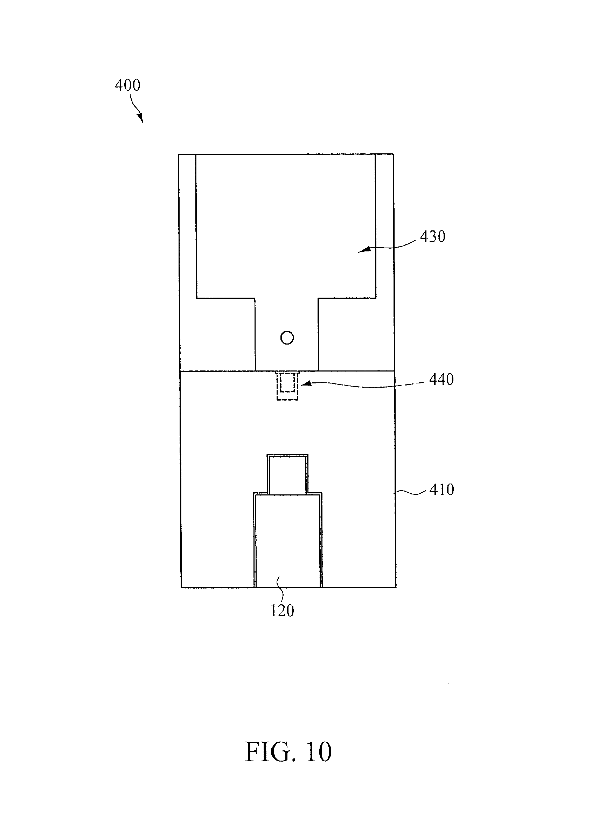

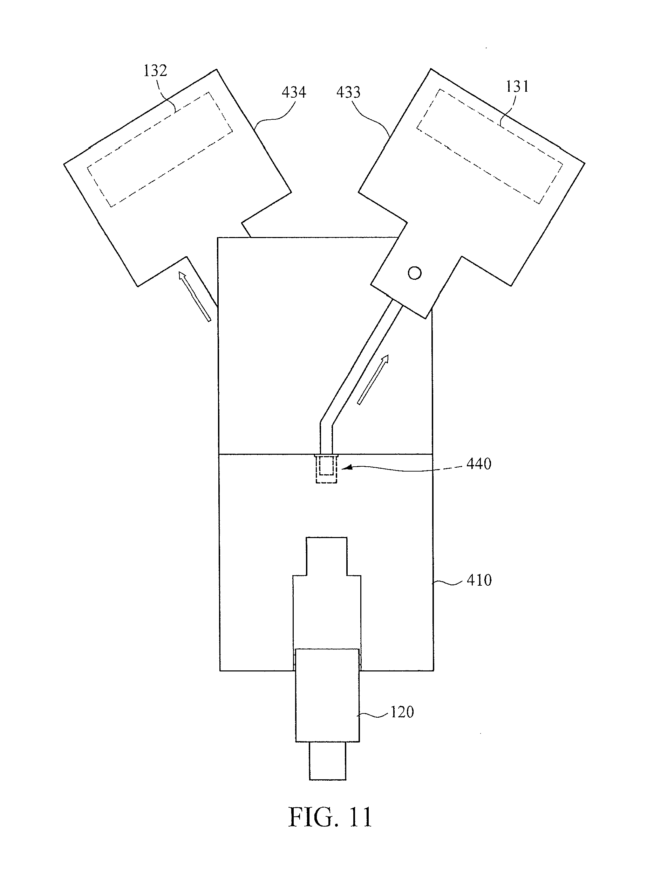

FIG. 10 is a plan view of a USB type wireless data card in accordance with an exemplary embodiment of the present invention. FIG. 11 is a plan view of FIG. 10, showing a first antenna and a second extending diagonally from a card body.

Referring to FIG. 10 and FIG. 11, in an antenna part 430 of a wireless data card 400, a first antenna mounting part 433 is disposed at a first or front surface of the card body 410, and a second antenna mounting part 434 is disposed at a second or rear surface of the card body 410.

The first antenna mounting part 433 is disposed in the card body 410 to slide and extend from the front surface of the card body 410 in an oblique direction toward a left side of the card body 410, i.e., a first side direction. The first antenna mounting part 433 slides away from an end of the card body 410 in which the USB connector 120 is disposed. In addition, the first antenna 131 is mounted in an end of the first antenna mounting part 433 and is disposed away from the card body 410 in a state in which the first antenna mounting part 433 extends from the card body 410. Here, the first antenna mounting part 433 may be guided by a guide to be rotated to a left side of the card body 410 by an angle to the oblique direction and then slid in the oblique direction.

The second antenna mounting part 434 is disposed at the card body 410 to slide and extend from a second or rear surface of the card body 410 in an oblique direction toward a right side of the card body 410, i.e., a second side direction. The second antenna mounting part 434 slides away from an end of the card body 410 in which the USB connector 120 is disposed. In addition, the second antenna 132 is mounted in an end of the second antenna mounting part 434 and is disposed away from the card body 410 in a state in which the second antenna mounting part 434 extends from the card body 410. The first and second antenna mounting parts 433 and 434 may be guided by a guide in the oblique direction.

The first antenna mounting part 433 and the second antenna mounting part 434 are folded to the card body 410, as shown in FIG. 10. In this state, as shown in FIG. 11, the user may extend the first antenna mounting part 433 and the second antenna mounting part 434 from respective sides of an end of the card body 410 opposite to an other end, in which the USB connector 120 is disposed. Therefore, the first antenna 131 and the second antenna 132 move away from the USB connector 120 and are spaced apart from each other. As a result, radiation efficiency of the first antenna 131 and the second antenna 132 may be increased, and isolation between the first antenna 131 and the second antenna 132 may be improved.

In the wireless data card 400, a user can push the first antenna mounting part 433 and the second antenna mounting part 434 folded to the card body 410 to slide and extend the first antenna mounting part 433 and the second antenna mounting part 434 from the card body 410. Meanwhile, the wireless data card 400 may be configured to automatically slide and extend the first antenna mounting part 433 and the second antenna mounting part 434 if the user applies a force to the first antenna mounting part 433 and the second antenna mounting part 434 folded to the card body 410.

In this case, the user can grip the automatically extended first antenna mounting part 433 and the second antenna mounting part 434 to rotate the first antenna mounting part 433 and the second antenna mounting part 434 by an angle to the oblique directions, and then, slide the first antenna mounting part 433 and the second antenna mounting part 434 in the oblique directions. In order to automatically extend the first antenna mounting part 433 and the second antenna mounting part 434, the wireless data card 400 may include an automatic extender 440. The automatic extender 440 may be configured similar to the automatic extender 140 as described above.

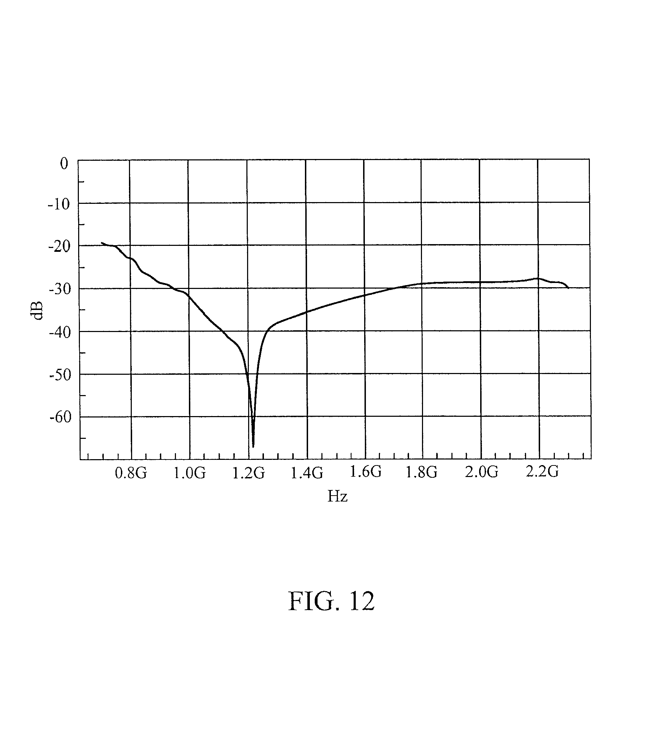

Performance of the first and second antennae of the wireless data card in accordance with an exemplary embodiment of the present invention will be described below. FIG. 12 is a graph showing isolation characteristics between a first antenna and a second antenna of a wireless data card in accordance with an exemplary embodiment of the present invention. Here, provided that the wireless data card has a size of 70 mm x 35 mm (width x length), and the first and second antennae have a size of 30 mm x 8 mm x 8 mm (width x length x height), isolation was measured using a 3-D simulation program, SEMCAD. In addition, an isolation value is a characteristic value showing a level mutually affected by the first antenna and the second antenna, i.e., as the isolation value is decreased, interference between the first and second antennae is also decreased.

As shown in FIG. 12, the lowest isolation value was -20 dB at 824 to 894 MHz (code division multiple access (CDMA) frequency bandwidth of North American Commercial Frequency), and -28 dB at 1850 to 1990 MHz (United State personal communications service (US-PCS) frequency bandwidth). Thus, it will be appreciated that stable isolation may be obtained. In addition, according to results of measuring radiation efficiency with the SEMCAD when it was passive, good performance of radiation efficiency of about 70 to 80% was represented.

In addition, according to results of measuring total radiated power (TRP) and total isotropic sensitivity (TIS) of the first and second antennae with the SEMCAD, the TRP was 22.2 dBm and the TIS was -104.2 dBm. These values satisfy conditions of a test standard of TRP larger than 20 dBm and TIS smaller than -101 dBm. Therefore, it will be appreciated that performance of the first and second antennae was improved.

As can be seen from the foregoing, if a wireless data card is used, since first and second antennae may be disposed away from a USB connector, the antennae may avoid noise occurring from an electronic device, such as a notebook computer, etc., or noise from a USB port to increase radiation efficiency.

In addition, since an interval between the first and second antennae may be increased while the wireless data card is used, isolation between the first and second antennae may be increased.

It will be apparent to those skilled in the art that various modifications and variation can be made in the present invention without departing from the spirit or scope of the invention. Thus, it is intended that the present invention cover the modifications and variations of this invention provided they come within the scope of the appended claims and their equivalents.

A universal serial bus (USB) type wireless data card is used for wireless communication in a multi-in/multi-out (MIMO) environment. The USB type wireless data card includes a card body. A USB connector is disposed at one end of the card body and connectable to a USB port of an electronic device. An antenna part includes first and second antennae connected to the card body such that the first and second antennae may be received in the card body and may be extended from the card body to move away from the card body and be spaced apart from the USB connector.

## Claims

1. A universal serial bus (USB) type wireless data card, comprising:
a card body;
a USB connector disposed at a first end of the card body; and
an antenna part comprising a first antenna and a second antenna, the first antenna and the second antenna being movable between being disposed in the card body and being extended from the card body.

2. The USB type wireless data card of claim 1, wherein the antenna part comprises:
a first antenna mounting part and a second antenna mounting part in which the first antenna and the second antenna are respectively disposed, the first antenna mounting part and the second antennae mounting part being connected to the card body to slide and extend from respective sides of the card body.

3. The USB type wireless data card of claim 2, further comprising an automatic extender to lock the first antenna mounting part and the second antenna mounting part in the card body, and to release the locked first antenna mounting part and second antenna mounting part and automatically extend the first antenna mounting part and the second antenna mounting part if an external force is applied to the locked first antenna mounting part and second antenna mounting part.

4. The USB type wireless data card of any of claims 1 to 3, wherein the antenna part comprises:
a first antenna mounting part and a second antenna mounting part in which the first antenna and the second antenna are respectively disposed, the first antenna mounting part and the second antenna mounting part being connected to the card body to slide away from the first end of the card body and to rotate the first antenna and the second antenna 90° with respect to respective sides of the card body.

5. The USB type wireless data card of claim 4, further comprising an automatic extender to lock the first antenna mounting part and the second antenna mounting part in the card body, and to release the locked first antenna mounting part and second antenna mounting part and automatically extend the first antenna mounting part and the second antenna mounting part if an external force is applied to the locked first antenna mounting part and second antenna mounting part.

6. The USB type wireless data card of claim 4 or 5, wherein the card body comprises:
guide grooves to guide the sliding and rotating of the first antenna mounting part and the second antenna mounting part.

7. The USB type wireless data card of any of claims 1 to 6, wherein the antenna part comprises:
a first antenna mounting part and a second antenna mounting part connected to the card body to slide and extend from respective front and rear surfaces of the card body toward respective sides of the card body in a two-stage manner,
wherein the first antenna and second antenna are respectively disposed in the first antenna mounting part and the second antenna mounting part.

8. The USB type wireless data card of claim 7, further comprising an automatic extender to lock the first antenna mounting part and the second antenna mounting part in the card body, and to release the locked first antenna mounting part and second antenna mounting part and automatically extend the first antenna mounting part and the second antenna mounting part if an external force is applied to the locked first antenna mounting part and second antenna mounting part.

9. The USB type wireless data card of claim 7 or 8, wherein the first antenna mounting part and the second antenna mounting part are folded about the card body.

10. The USB type wireless data card of any of claims 1 to 9, wherein the antenna part comprises:
a first antenna mounting part and a second antenna mounting part connected to the card body to slide and extend from respective front and rear surfaces of the card body in an oblique direction from the card body toward respective left and right sides of the card body,
wherein the first and second antennae are respectively disposed in the first antenna mounting part and the second antenna mounting part.

11. The USB type wireless data card of claim 10, further comprising an automatic extender to lock the first antenna mounting part and the second antenna mounting part in the card body, and to release the locked first antenna mounting part and second antenna mounting part and automatically extend the first antenna mounting part and the second antenna mounting part if an external force is applied to the locked first antenna mounting part and second antenna mounting part.

12. The USB type wireless data card of any of claims 1 to 11, wherein the USB connector and the card body are connected by a hinge.

13. The USB type wireless data card of claim 12, further comprising a receiving groove disposed in the card body into which the USB connector is rotated.

14. The USB type wireless data card of claim 13, wherein the receiving groove and the USB connector comprise complementary shapes.
